(19) Europäisches Patentamt
European Patent Office
Office européen des brevets

(11) **EP 1 305 173 B1**

(12) **FASCICULE DE BREVET EUROPEEN**

(45) Date de publication et mention
de la délivrance du brevet:
**04.07.2007 Bulletin 2007/27**

(21) Numéro de dépôt: **01962865.0**

(22) Date de dépôt: **20.07.2001**

(51) Int Cl.:
***B60C 23/04*** (2006.01)

(86) Numéro de dépôt international:
**PCT/EP2001/008429**

(87) Numéro de publication internationale:
**WO 2002/007996 (31.01.2002 Gazette 2002/05)**

(54) **PROCEDE D'EVALUATION DE L'AUTONOMIE D'UN SYSTEME DE ROULAGE A PLAT**

AUSWERTUNGSVERFAHREN DER AUTONOMIE EINES NOTLAUFREIFENSYSTEMS

METHOD FOR ASSESSING THE ENDURANCE OF A RUNNING FLAT SYSTEM

(84) Etats contractants désignés:
**AT BE CH CY DE DK ES FI FR GB GR IE IT LI LU MC NL PT SE TR**

(30) Priorité: **25.07.2000 FR 0009734**

(43) Date de publication de la demande:
**02.05.2003 Bulletin 2003/18**

(73) Titulaires:
• **Société de Technologie Michelin
63000 Clermont-Ferrand Cedex 09 (FR)**
• **MICHELIN Recherche et Technique S.A.
1763 Granges-Paccot (CH)**

(72) Inventeurs:
• **HOTTEBART, François
Tochigi-ken 326-0825 (JP)**
• **SHEPHERD, Russell
F-63100 Clermont-Ferrand (FR)**

(74) Mandataire: **Dequire, Philippe Jean-Marie Denis
M.F.P. Michelin,
SGD/LG/PI-F35-Ladoux
63040 Clermont-Ferrand Cedex 09 (FR)**

(56) Documents cités:
**US-A- 4 186 377**          **US-A- 6 087 930**

**Description**

L'invention a pour objet un procédé d'évaluation de l'autonomie d'un système de roulage à plat ; on désigne par système de roulage à plat d'un véhicule un ensemble comprenant au moins pour chaque roue une enveloppe pneumatique, un avertisseur de dégonflement et des moyens de support de la bande de roulement de l'enveloppe pneumatique en cas de dégonflement de l'enveloppe.

Le procédé selon l'invention permet aussi d'évaluer les conditions de réutilisation du système de roulage à plat ; ces conditions - après un roulage à plat ou à très faible pression - peuvent être soit la réutilisation pure et simple du système en l'état, après réparation et regonflage de l'enveloppe pneumatique, soit le changement de pneumatique, soit le remplacement de l'appui de sécurité, ou les deux.

On sait que la baisse de pression d'un pneumatique peut être brutale, par exemple à la suite d'un éclatement, ou très lente, par exemple après une crevaison, mais dans tous les cas il y a un risque d'accident par perte de contrôle de la direction du véhicule. On a donc imaginé des dispositifs dits « de roulage à plat » qui comprennent généralement un appui de sécurité annulaire monté à l'intérieur du pneumatique pour limiter l'affaissement de ce dernier et éventuellement pour éviter le phénomène du décoincement, c'est-à-dire le déplacement d'un bourrelet du pneumatique vers l'intérieur de la jante, ce qui provoque le déjantage du pneumatique.

Un tel dispositif est décrit, par exemple, dans les brevets WO 94/13498 et EP 0 796 747 (Michelin et Cie).

On a aussi imaginé des pneumatiques dont la structure, notamment des flancs, est fortement renforcée pour leur permettre de rouler à faible pression ou à pression nulle. Un exemple de tels pneumatiques dits « autoporteurs » est donné dans le brevet US 6,026,878 de Goodyear.

Le document U-A-4,186,377 divulgue quant à lui une méthode d'évaluation de la pression d'un pneumatique lors d'un roulage à plat.

Paradoxalement, ces dispositifs modernes de roulage à plat sont si efficaces que le conducteur ne s'aperçoit pas aisément de la baisse de la pression de l'un des pneumatiques de son véhicule. Ces systèmes doivent donc comporter des appareils de mesure de la pression des pneumatiques dont la fonction essentielle est d'avertir le conducteur dès que la pression dans un pneumatique descend en dessous d'un seuil prédéterminé.

Ces systèmes de roulage à plat, basés sur l'utilisation de moyens de support de la bande de roulement de l'enveloppe pneumatique en cas de dégonflement de l'enveloppe disposés dans ou en dehors de l'enveloppe pneumatique autorisent actuellement, selon les manufacturiers de pneumatiques, un roulage dans des conditions de roulage à plat à vitesse limitée (de l'ordre de 80 km/h au maximum) et pour une distance elle aussi limitée (de l'ordre de 200 km).

En réalité, ces valeurs limites sont déterminées dans des conditions très sévères d'utilisation des véhicules et des systèmes de roulage à plat et sous-estiment ainsi très souvent le potentiel d'utilisation réel de ces systèmes et l'autonomie qu'ils peuvent offrir aux usagers.

Le but de l'invention est précisément d'indiquer au conducteur à chaque instant une estimation de l'autonomie réelle dont il dispose après une forte perte de pression, suivant les conditions réelles du roulage.

La présente invention permet donc d'indiquer à chaque instant au conducteur son autonomie réelle ; le cas échéant, elle prévient le conducteur qu'il a franchi une distance maximale et qu'il devrait s'arrêter ; enfin, elle lui précise les conditions de réutilisation de son système de roulage à plat.

Pour obtenir ce résultat, l'invention fait appel à un traitement de données provenant de différents capteurs et représentant des paramètres significatifs du système de roulage à plat concerné et du véhicule.

Le procédé selon l'invention d'évaluation de l'autonomie d'un système de roulage à plat équipant un véhicule, le système comprenant au moins pour chaque roue une enveloppe pneumatique, un avertisseur de dégonflement et des moyens de support de la bande de roulement de l'enveloppe pneumatique en cas de dégonflement de l'enveloppe, est caractérisé en ce que, à partir du moment où l'avertisseur de dégonflement a détecté un seuil de dégonflement prédéterminé :

- on mesure périodiquement la distance parcourue et un paramètre C(t) caractéristique des conditions du roulage;
- on détermine en fonction de C(t) et de la distance parcourue pendant la période $\Delta t$ une grandeur caractéristique d'un endommagement élémentaire potentiel du système pendant ladite période écoulée $\Delta t$;
- on calcule une estimation de l'endommagement global par combinaison des endommagements élémentaires calculés depuis le début du roulage à plat ; et
- on transmet au conducteur du véhicule une grandeur liée à cette estimation de l'endommagement global du système de roulage à plat.

Avantageusement, à partir d'une série d'essais de roulage dans des conditions correspondant à celles du paramètre caractéristique C, on détermine une fonction F(C) donnant pour toute valeur du paramètre C une estimation e de l'autonomie du système de roulage à plat neuf dans ces conditions de roulage C :

$$e(t) = F[C(t)]$$

On peut estimer un endommagement élémentaire potentiel $\Delta J$ pendant la période de roulage $\Delta t$ par le rapport :

$$\Delta J = \Delta d/e(t)$$

dans lequel, $\Delta d = [d(t) - d(t - \Delta t)]$ est égal à la distance parcourue par le véhicule pendant la période $\Delta t$.

Dans un mode de réalisation préférentiel, en considérant J, potentiel d'utilisation du système de roulage à plat, à chaque période de mesure $\Delta t$, on actualise l'estimation de J(t) par :

$$J(t) = J(t-\Delta t) - \Delta J$$

De préférence, J est initialisé à 1 lorsque le système de roulage à plat est neuf.

Avantageusement, on transmet au conducteur du véhicule la valeur actualisé de J(t). On peut aussi, en considérant E, autonomie restante du système de roulage à plat dans les conditions actuelles de roulage, estimer E par :

$$E = J(t) \times e(t)$$

et on transmet régulièrement au conducteur du véhicule une valeur actualisée de cette estimation.

Il est évidemment possible, sans sortir du cadre de l'invention, de définir une autre formule pour le calcul de E. Notamment, pour s'affranchir des diminutions importantes de e(t) dans les premiers kilomètres du roulage, on pourra anticiper la diminution prévisible du paramètre e(t).

Lorsque le potentiel d'utilisation diminue en dessous d'un seuil donné $J_0$, on transmet de préférence au conducteur du véhicule un avertissement lui recommandant de s'arrêter prochainement.

Avantageusement, lorsque la pression de gonflage mesurée est inférieure à un seuil donné, on considère que le pneumatique concerné est dans des conditions de roulage à plat.

Pour éviter de surestimer l'autonomie restante, et pour ne pas inciter le conducteur à rouler trop longtemps à plat, on compare la valeur de ladite autonomie réelle à une valeur empirique maximale, et l'on retient la plus petite de ces deux valeurs pour calculer l'autonomie restante.

Dans une variante préférentielle de l'invention, on utilise comme paramètre caractéristique la température de l'air interne du pneumatique concerné, soit :

$$C(t) = T(t)$$

Dans une variante simplifiée de l'invention, e(t) = F[C(t)] est donné par :

$$e(t) = e_0 \exp\left[ (\ln 2)\left( \frac{T_0 - T(t)}{\Delta T} \right) \right]$$

où :

- e est ladite autonomie modélisée, exprimée en kilomètres (km), qui correspond à l'autonomie disponible avant immobilisation d'un système de roulage à plat roulant à une température T constante ;
- T est la température de l'air interne (en degrés Celsius);
- $T_0$ est une température arbitraire de référence (en degrés Celsius), par exemple la température maximale susceptible d'être atteinte ;
- $e_0$ est l'autonomie estimée à la température $T_0$ ; $e_0$ est de l'ordre de 200 km ;

- $\Delta T$ (en degrés Celsius) est un intervalle de température correspondant à une réduction d'un facteur 2 de l'autonomie ; $\Delta T$ est de l'ordre de 10°C.

Une autre expression simplifiée de la relation entre l'autonomie et la température de l'air interne utilisable est :

$$e(t) = e_0^{'}(T_0 - T) + e_1^{'}$$

où :

- e est l'autonomie modélisée, exprimée en km, qui correspond à l'autonomie disponible avant immobilisation d'un système de roulage à plat roulant à une température T constante ;
- T est la température de l'air interne mesurée (en degrés Celsius);
- $T_0$ est une température arbitraire de référence (en degrés Celsius), par exemple la température maximale susceptible d'être atteinte ;
- $e_0^{'}$ est la pente de la relation linéaire entre l'autonomie et (To - T), écart entre température maximale et température mesurée de l'air interne.
- $e_1^{'}$ est l'autonomie estimée à la température $T_0$.

Il est évidemment possible, sans sortir du cadre de l'invention, d'utiliser tel ou tel autre paramètre caractéristique, seul ou en combinaison, des conditions de roulage à plat.

On peut avantageusement choisir ces paramètres caractéristiques dans le groupe suivant : la pression de gonflage, la localisation du pneumatique concerné, la charge appliquée, la température extérieure, la vitesse du véhicule, le type de véhicule, la vitesse de balayage des essuie-glaces, les efforts longitudinaux et transversaux appliqués à la roue concernée.

On peut également se servir de la localisation, de la température de l'air interne et de la pression des autres pneus gonflés.

Le procédé selon l'invention peut aussi s'appliquer, outre l'évaluation de l'endommagement et de l'autonomie du système de roulage à plat, à l'évaluation de la réutilisation du pneumatique concerné par le roulage à plat ainsi qu'à l'évaluation de la réutilisation de l'insert de sécurité, s'il y a lieu.

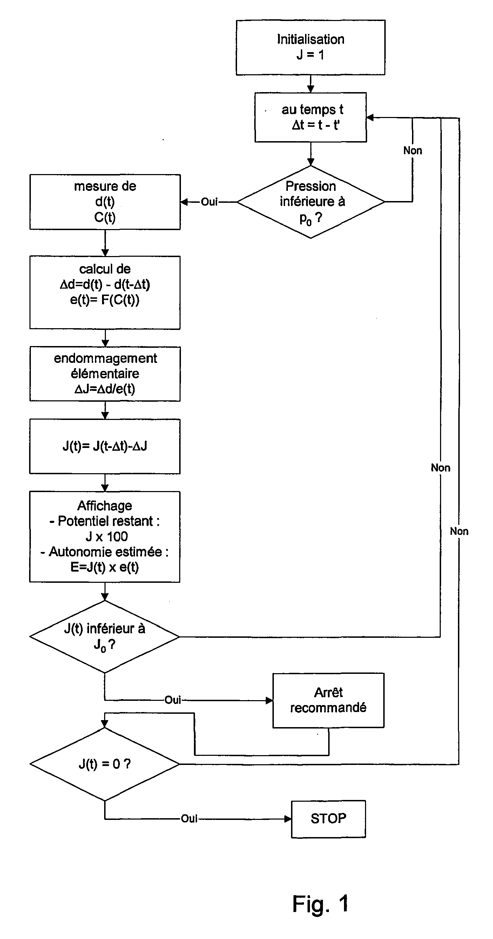

Pour mieux comprendre l'invention, on va décrire un schéma de principe du procédé présenté à la figure 1.

En considérant J, potentiel d'utilisation du système de roulage à plat considéré, on initialise J à 1 lorsque le système est neuf.

Tout au long du roulage, on effectue des mesures de contrôle avec une période $\Delta t$. t' étant l'instant auquel les mesures précédentes ont été effectuées, on a $\Delta t = t - t'$. $\Delta t$ peut être constant ou non suivant le cas.

On détermine si, à cet instant t, l'un des pneumatiques du véhicule a une pression de gonflage inférieure à un seuil $p_0$, de l'ordre de 0,7 bar. Si tel n'est pas le cas, on recommence à la période suivante.

Si l'un des pneumatiques a une pression inférieure à cette valeur, on mesure la distance parcourue, d(t) depuis le franchissement de ce seuil d'alerte ainsi qu'une grandeur caractéristique du roulage à plat, par exemple la température de l'air interne du pneumatique, C(t).

Puis on calcule la distance parcourue depuis la dernière mesure :

$$\Delta d = [d(t) - d(t - \Delta t)]$$

et

$$e(t) = F[C(t)]$$

e(t) est l'estimation de l'autonomie du système de roulage à plat neuf dans les conditions C(t). La fonction F (C) est déterminée empiriquement à partir d'une série d'essais réalisés en faisant varier les conditions de roulage à plat. Cette fonction est usuellement bornée à une valeur maximale donnée, par exemple 1500 km.

On calcule alors un endommagement élémentaire potentiel pendant la période de mesure considérée :

$$\Delta J = \Delta d/e(t)$$

Et on actualise le potentiel d'utilisation actuel du système par :

$$J(t) = J(t\text{-}\Delta t) - \Delta J$$

On peut alors transmettre au conducteur du véhicule l'estimation du potentiel d'utilisation du système actualisée Jx100, en % par exemple. On peut aussi transmettre une estimation E de l'autonomie résiduelle dans les conditions actuelles de roulage donnée par exemple en calculant le produit :

$$E = J(t) \times e(t)$$

On vérifie alors la valeur de J(t) par rapport à un premier seuil de l'ordre de 10%, si ce seuil est franchi, on avertit le conducteur du véhicule qu'il doit prochainement s'arrêter, lorsque J(t) devient 0, on indique au conducteur qu'il doit s'arrêter.

Lorsque ce dernier seuil n'est pas franchi, on reprend le cycle du procédé selon l'invention à la période $\Delta t$ suivante.

On va maintenant indiquer pour les principaux paramètres caractéristiques quelles sont les conditions les plus sévères et quelle peut être l'augmentation estimée de l'autonomie.

Tout d'abord, la pression résiduelle du pneumatique concerné : un pneumatique « à plat » n'a pas forcément une pression nulle comme c'est le cas au cours des essais en conditions sévères ; si la perte de pression est lente (environ 80% des cas de crevaison), en début de roulage à plat, le pneumatique s'échauffe et se regonfle même un peu temporairement : on peut estimer qu'une pression supplémentaire de 0,2 bar peut multiplier l'autonomie minimale par 10.

Pour ce qui concerne la charge du véhicule, les essais sévères sont faits à charge maximale, ce n'est pas toujours le cas dans la réalité : par exemple, une diminution d'environ 60 daN sur un véhicule familial multiplie l'autonomie minimale par 2.

La température extérieure retenue pour les essais sévères peut être 40°C. Un écart en moins d'environ 12°C multiplie l'autonomie minimale par 2.

Les conditions atmosphériques ont aussi une influence : par temps humide l'autonomie est augmentée de manière très significative grâce à la réduction de la température de fonctionnement du système.

L'état du sol joue également un rôle important : ainsi, sur un sol bosselé, qui crée des surcharges dynamiques, l'autonomie est réduite de manière importante.

Le fractionnement du trajet en plusieurs étapes augmente beaucoup l'autonomie car le système de roulage à plat se refroidit au cours des arrêts.

Les efforts longitudinaux sont très pénalisants pour les systèmes de roulage à plat car, notamment en freinage, ils génèrent des surcharges dynamiques. Ceci est particulièrement sensible pour les systèmes de roulage à plat situés sur l'essieu avant.

Les efforts transversaux sont très pénalisants pour les systèmes de roulage à plat car les efforts en virage génèrent des surcharges dynamiques localisées.

La localisation du pneumatique concerné sur le véhicule, essieu avant ou arrière, est importante car les conditions réelles de roulage sont fonction des réglages des suspensions (par exemple angle de carrossage..) qui peuvent différer à l'avant et à l'arrière.

On va donner ci-après un exemple réalisé dans des conditions précises.

Les essais ont été conduits sur une Renault « Scénic » équipée du système de roulage à plat « PAX » de la Société Michelin comportant un appui de sécurité en caoutchouc. La dimension des pneumatiques était 185-620 R 420. La pression était nulle (valve enlevée). L'autonomie annoncée par le manufacturier était de l'ordre de 200 km.

Dans le test, l'autonomie maximale a été fixée à 1500 km et le seul paramètre retenu a été la température (T) de l'air interne du pneumatique. Pour des raisons technologiques, la température interne maximale mesurable était de 110°C.

Quand la température était inférieure strictement à 110°C, nous avons utilisé la formule empirique :

$$e(t) = e_0 \exp\left[ (\ln 2)\left( \frac{T_0 - T(t)}{\Delta T} \right) \right]$$

avec $T_0$ fixé à 110°C et les valeurs suivantes qui ont été identifiées de manière empirique :

$$e_0 = 250 \text{ km, et } \Delta T = 12°C.$$

Quand la température était égale à 110°C, nous avons utilisé la formule empirique :

$$e(T) = e_{lim} \text{ avec } e_{lim} = 200 \text{ km}$$

Ce test a conduit aux valeurs d'autonomie indiquées à l'avant-dernière colonne du tableau suivant, qui donne les conditions de trois types de roulages :

- la première ligne du tableau est une simulation de cycle urbain sur une machine dite « rouleuse » ;
- la deuxième ligne est un roulage mixte routier/autoroutier ; et
- la troisième ligne est un autre roulage mixte routier/autoroutier ;
- la colonne 1 donne la charge moyenne (pour une charge maximale de 425 daN) ;
- la colonne 2 donne le fractionnement du trajet sous la forme du nombre d'arrêts de plus de 15 minutes ;
- la colonne 3 donne la vitesse moyenne de roulage ;
- la colonne 4 donne le pourcentage de route humide ;
- la colonne 5 donne la température moyenne de l'air extérieur ;
- la colonne 6 donne la température moyenne de l'air interne pendant le roulage ;
- la colonne 7 donne l'autonomie réelle mesurée ;
- la colonne 8 donne l'autonomie évaluée par le procédé, objet de l'invention ;
- la colonne 9 donne le « gain » pour le conducteur par rapport à une autonomie minimale annoncée par le constructeur (200 km).

| Charge daN | Nombre arrêts | Vitesse moyenne km/h | % route humide | T air extérieur | T air interne | Autonomie mesurée km | Autonomie estimée km | Gain km |
|---|---|---|---|---|---|---|---|---|
| 310 | 187 | 48 | 0 % | 20°C | 54°C | 1499 | 1206 | 1006 |
| 383 | 2 | 100 | 23% | 8°C | 98°C | 780 | 393 | 193 |
| 337 | 8 | 84 | 26% | 9°C | 93°C | 1751 | 439 | 239 |

Dans le cas des essais considérés, l'autonomie du système de roulage à plat était liée à celle de l'appui de sécurité disposé autour de la jante de la roue du système.

On voit que le gain d'autonomie procuré par la procédé objet de l'invention est important, même dans le cas pénalisant du roulage routier/autoroutier à vitesse soutenue et charge plus élevée (deuxième ligne du tableau).

Enfin, il est avantageux de prévoir une alarme pour le conducteur lorsque l'autonomie restante devient inférieure à une valeur prédéterminée.

Un deuxième essai est maintenant décrit. Cet essai a été conduit avec un véhicule Peugeot 806 équipé du système de roulage à plat PAX comportant un appui de sécurité en caoutchouc. La dimension des pneumatiques était 205-650R440. La pression des pneumatiques était nulle (valve enlevée).

Comme précédemment, l'autonomie maximale a été fixée à 1500 km et le seul paramètre retenu a été la température (T) de l'air interne du pneumatique. Pour des raisons technologiques, la température interne maximale mesurable était de 110°C.

Quand la température était inférieure strictement à 110°C, nous avons utilisé la formule empirique :

$$e(t) = e_0'(T_0 - T) + e_1'$$

avec $T_0$ fixé à 110°C et les valeurs suivantes qui ont été identifiées de manière empirique :

$$e'_0 = 10.0 \text{ km/°C, } e'_1 = 138 \text{ km,}$$

Quand la température était égale ou supérieure à 110°C, nous avons utilisé la formule empirique :

$$e(T) = e_{lim} \text{ avec } e_{lim} = 138 \text{ km}$$

Ce test a conduit aux valeurs d'autonomie indiquées à l'avant-dernière colonne du tableau suivant, qui donne les conditions de neuf essais de roulages :

- la première colonne donne la charge statique moyenne ;.
- la colonne 2 donne la vitesse moyenne de roulage ;
- la colonne 3 la température moyenne de l'air extérieur ;
- la colonne 4 donne la température moyenne mesurée de l'air interne du pneumatique ;
- la colonne 5 donne la température maximale mesurée de l'air interne du pneumatique ;
- la colonne 6 donne l'autonomie réelle mesurée ;
- la colonne 7 donne l'autonomie évaluée par le procédé, objet de l'invention ;
- la colonne 8 donne la différence entre l'endurance évaluée et l'endurance réelle.

| Charge moyenne | Vitesse moyenne en roulage | $T_{ext}$ moyenne en roulage | Tmoyenne en roulage | max{T} en roulage | Endurance réelle | Endurance évaluée | Différence |
|---|---|---|---|---|---|---|---|
| 542 daN | 64 km/h | 11 °C | 102 °C | 110°C | 295 km | 175 km | -120 km |
| 542 daN | 69 km/h | 11°C | 95 °C | 104 °C | 346 km | 264 km | -82 km |
| 542 daN | 60 km/h | 11 °C | 91°C | 100 °C | 430 km | 328 km | -102 km |
| 542 daN | 100km/h | 30 °C | 110°C | 110°C | 168 km | 138 km | -30 km |
| 542 daN | 65 km/h | 10 °C | 99°C | 110 °C | 459 km | 213 km | -246 km |
| 542 daN | 44 km/h | 10 °C | 81°C | 110°C | 906 km | 342 km | -564 km |
| 460 daN | 39 km/h | 10 °C | 74°C | 90 °C | 613 km | 445 km | -168 km |
| 542 daN | 40 km/h | 10 °C | 72 °C | 94°C | 493 km | 486 km | -7 km |
| 542 daN | 61 km/h | 10 °C | 94°C | 110 °C | 597 km | 262 km | -335 km |

La fonction d'ajustement choisie est particulièrement aisée à mettre en oeuvre. Elle permet, comme le montre les résultats précédents, d'améliorer sensiblement les conditions réelles d'utilisation du système de roulage à plat en autorisant une durée d'utilisation en roulage à plat plus élevée lorsque les conditions réelles d'utilisation le permettent.
Dans le cas des deux essais considérés, l'autonomie du système de roulage à plat était liée à celle de l'appui de sécurité disposé autour de la jante de la roue du système.

## Revendications

1. Procédé d'évaluation de l'autonomie d'un système de roulage à plat équipant un véhicule, ledit système comprenant au moins pour chaque roue une enveloppe pneumatique, un avertisseur de dégonflement et des moyens de support de la bande de roulement de l'enveloppe pneumatique en cas de dégonflement de l'enveloppe pneumatique, **caractérisé en ce que**, à partir du moment où ledit avertisseur de dégonflement a détecté un seuil de dégonflement prédéterminé :

- on mesure périodiquement la distance parcourue et un paramètre C(t) caractéristique des conditions du roulage ;
- on détermine en fonction de C(t) et de la distance parcourue pendant la période $\Delta t$ une grandeur caractéristique d'un endommagement élémentaire potentiel du système pendant ladite période écoulée $\Delta t$;
- on calcule une estimation de l'endommagement global par combinaison desdits endommagements élémentaires calculés depuis le début du roulage à plat ; et
- on transmet au conducteur du véhicule une grandeur liée à cette estimation de l'endommagement global du système de roulage à plat.

2.  Procédé d'évaluation de l'autonomie d'un système de roulage à plat suivant la revendication 1, dans lequel, à partir d'une série d'essais de roulage dans des conditions correspondant à celles du paramètre caractéristique C, on détermine une fonction F(C) donnant pour toute valeur du paramètre C une estimation e de l'autonomie du système de roulage à plat neuf dans ces conditions de roulage C :

$$e = F(C)$$

3.  Procédé d'évaluation de l'autonomie d'un système de roulage à plat suivant la revendication 2, dans lequel, on estime l'endommagement élémentaire potentiel $\Delta J$ pendant la période de roulage $\Delta t$ par le rapport :

$$\Delta J = \Delta d/e(t)$$

dans lequel, $\Delta d$ est égal à la distance parcourue par le véhicule pendant la période $\Delta t$.

4.  Procédé d'évaluation de l'autonomie d'un système de roulage à plat suivant la revendication 3, dans lequel, en considérant J, potentiel d'utilisation du système de roulage à plat, à chaque période de mesure $\Delta t$, on actualise l'estimation de J(t) par :

$$J(t) = J(t\text{-}\Delta t) - \Delta J$$

5.  Procédé d'évaluation de l'autonomie d'un système de roulage à plat suivant la revendication 4, dans lequel J est initialisé à 1 lorsque le système de roulage à plat est neuf.

6.  Procédé d'évaluation de l'autonomie d'un système de roulage à plat suivant l'une des revendications 4 et 5, dans lequel on transmet au conducteur du véhicule la valeur actualisé de J(t).

7.  Procédé d'évaluation de l'autonomie d'un système de roulage à plat suivant l'une des revendications 4 à 6, dans lequel, en considérant E, autonomie restante du système de roulage à plat dans les conditions actuelles de roulage, on transmet au conducteur du véhicule une valeur actualisée de cette estimation.

8.  Procédé d'évaluation de l'autonomie d'un système de roulage à plat suivant la revendication 7, dans lequel, on estime E par :

$$E = J(t) \text{ x } e(t)$$

9.  Procédé d'évaluation de l'autonomie d'un système de roulage à plat suivant l'une des revendications 4 à 8, dans lequel, lorsqu'on franchit un seuil donné $J_0$, on transmet au conducteur du véhicule un avertissement.

10. Procédé selon l'une des revendications 1 à 9, dans lequel, lorsque la pression de gonflage mesurée est inférieure à un seuil donné, on considère que le pneumatique concerné est dans des conditions de roulage à plat.

11. Procédé d'évaluation de l'autonomie d'un système de roulage à plat suivant l'une des revendications 1 à 10, dans lequel, ledit avertisseur de dégonflement mesurant périodiquement, en plus de la pression de gonflage du pneumatique, la température de l'air interne T, on utilise comme paramètre caractéristique des conditions de roulage dudit système de roulage à plat ladite température de l'air interne du pneumatique concerné.

12. Procédé d'évaluation de l'autonomie d'un système de roulage à plat suivant la revendication 11, dans lequel, e(t) = F[T(t)] est donné par :

$$e(t) = e_0 \exp\left[ (\ln 2)\left( \frac{T_0 - T(t)}{\Delta T} \right) \right]$$

où :

• e est ladite autonomie modélisée, exprimée en kilomètres, qui correspond à l'autonomie disponible avant immobilisation d'un système de roulage à plat roulant à une température T constante ;
• T est la température de l'air interne (en degrés Celsius) ;
• $T_0$ est une température arbitraire de référence (en degrés Celsius) ;
• $e_0$ est l'autonomie estimée à la température $T_0$ ;
• $\Delta T$ (en degrés Celsius) est un intervalle de température correspondant à une réduction d'un facteur 2 de l'autonomie.

13. Procédé d'évaluation de l'autonomie d'un système de roulage à plat suivant la revendication 11, dans lequel, e(t) = F[T(t)] est donné par :

$$e(t) = e_0'\left(T_0 - T\right) + e_1'$$

où:

• e est ladite autonomie modélisée, exprimée en kilomètres, qui correspond à l'autonomie disponible avant immobilisation d'un système de roulage à plat roulant à une température T constante ;
• T est la température de l'air interne (en degrés Celsius) ;
• $T_0$ est une température arbitraire de référence (en degrés Celsius) ;
• $e_0'$ est la pente de la relation linéaire entre l'autonomie et ($T_0$ - T), écart entre température maximale et température mesurée de l'air interne ;
• $e_1'$ est l'autonomie estimée à la température $T_0$.

14. Procédé d'évaluation de l'autonomie d'un système de roulage à plat suivant l'une des revendications 2 à 13, dans lequel on borne la valeur maximale de e à une valeur arbitraire donnée.

15. Procédé d'évaluation de l'autonomie d'un système de roulage à plat suivant l'une des revendications 1 à 14, dans lequel on utilise comme paramètre caractéristique complémentaire des conditions de roulage dudit système de roulage à plat la pression de gonflage du pneumatique concerné.

16. Procédé d'évaluation de l'autonomie d'un système de roulage à plat suivant l'une des revendications 1 à 14, dans lequel on utilise comme paramètre caractéristique complémentaire des conditions de roulage dudit système de roulage à plat la localisation sur le véhicule du pneumatique concerné.

17. Procédé d'évaluation de l'autonomie d'un système de roulage à plat suivant l'une des revendications 1 à 16, dans lequel, ledit véhicule comportant des moyens pour estimer la charge appliquée aux roues, on utilise comme paramètre caractéristique complémentaire des conditions de roulage dudit système de roulage à plat la charge appliquée à la roue concernée.

**18.** Procédé d'évaluation de l'autonomie d'un système de roulage à plat suivant l'une des revendications 1 à 17, dans lequel, ledit véhicule comportant des moyens pour mesurer la température extérieure au véhicule, on utilise comme paramètre caractéristique complémentaire des conditions de roulage dudit système de roulage à plat ladite température extérieure.

**19.** Procédé d'évaluation de l'autonomie d'un système de roulage à plat suivant l'une des revendications 1 à 18, dans lequel, on utilise comme paramètre caractéristique complémentaire des conditions de roulage dudit système de roulage à plat la vitesse de roulage du véhicule.

**20.** Procédé d'évaluation de l'autonomie d'un système de roulage à plat suivant l'une des revendications 1 à 19, dans lequel, ledit véhicule comportant des moyens pour mesurer les efforts transversaux appliqués auxdites roues, on utilise comme paramètre caractéristique complémentaire des conditions de roulage dudit système de roulage à plat lesdits efforts transversaux.

**21.** Procédé d'évaluation de l'autonomie d'un système de roulage à plat suivant l'une des revendications 1 à 20, dans lequel on utilise comme paramètre caractéristique complémentaire au moins une grandeur choisie dans le groupe des efforts longitudinaux, du type de véhicule, de la vitesse de balayage des essuie-glaces et de la localisation du pneumatique concerné.

**22.** Procédé d'évaluation de l'autonomie d'un système de roulage à plat suivant l'une des revendications 1 à 21, dans lequel on utilise comme paramètre caractéristique complémentaire au moins une grandeur choisie dans le groupe de la température de l'air interne et de la pression des autres pneumatiques gonflés.

**23.** Procédé selon l'une des revendications 1 à 22, dans lequel les moyens de renforcement structurel de l'enveloppe pneumatique sont un appui de sécurité disposé radialement extérieurement relativement à la jante de ladite roue et destiné à supporter la bande de roulement de ladite enveloppe pneumatique en cas de perte de pression de gonflage.

**24.** Procédé selon l'une des revendications 1 à 22, dans lequel les moyens de renforcement structurel de l'enveloppe pneumatique sont insérés dans la structure de ladite enveloppe.

**25.** Application du procédé selon l'une des revendications 1 à 24 à l'évaluation de la réutilisation du pneumatique concerné par le roulage à plat.

**26.** Application du procédé selon l'une des revendications 1 à 23 à l'évaluation de la réutilisation de l'insert de sécurité du pneumatique concerné par le roulage à plat.

**Claims**

**1.** A method for assessing the endurance of a running flat system which is fitted to a vehicle, the said system comprising, at least for each wheel, a tyre, a deflation alarm and means for supporting the tread of the tyre in the event that the tyre is deflated, **characterised in that**, from the moment when the deflation alarm has detected a predetermined threshold of deflation:

> - the distance travelled and a parameter C(t) characteristic of the travel conditions are measured periodically;
> - as a function of C(t) and the distance travelled over the period $\Delta t$, a quantity characteristic of a potential elementary damage to the system over the said elapsed period $\Delta t$ is determined;
> - an estimate of the overall damage is calculated from a combination of the said elementary damages calculated since the start of running flat travelling; and
> - there is transmitted to the driver of the vehicle a quantity linked to this estimate of overall damage to the running flat.

**2.** A method according to Claim 1, in which from a series of rolling tests in conditions corresponding to those of the characteristic parameter C there is determined a function F(C) giving an estimate e for any value of the parameter C of the endurance of the new running flat system in travel conditions C:

$$e = F(C)$$

3. A method according to Claim 2, in which the potential elementary damage $\Delta J$ over the period of travel $\Delta t$ is estimated by applying the ratio:

$$\Delta J = \Delta d / e(t)$$

where $\Delta d$ is equal to the distance travelled by the vehicle over the period $\Delta t$.

4. A method according to Claim 3, in which, taking J, the potential for using the running flat system, at any period of measurement $\Delta t$, the estimate of J(t) is updated from:

$$J(t) = J(t\text{-}\Delta t) - \Delta J$$

5. A method according to Claim 4, in which J is set to 1 when the running flat system is new.

6. A method according to either of Claims 4 and 5, in which the updated value of J(t) is transmitted to the driver of the vehicle.

7. A method according to one of Claims 4 to 6, in which, taking E, the remaining endurance of the running flat system under current conditions of travel, an updated value of this estimate is transmitted to the driver of the vehicle.

8. A method according to Claim 7, in which E is estimated from:

$$E = J(t) \text{ x } e(t)$$

9. A method according to one of Claims 4 to 8, in which, when a given threshold $J_0$ is passed, a warning is transmitted to the driver of the vehicle.

10. A method according to one of Claims 1 to 9, in which, when the measured pressure of inflation is below a given threshold, the tyre concerned is considered to be in the running flat condition.

11. A method according to one of Claims 1 to 10, in which the said deflation alarm periodically measures, as well as the inflation pressure of the tyre, the temperature of the inside air T, and there is used as a parameter characteristic of the conditions of travel of the said running flat system the said temperature of the air inside the tyre concerned.

12. A method according to Claim 11, in which e(t) = F[T(t)] is given by:

$$e(t) = e_0 \exp\left[ (\ln 2)\left( \frac{T_0 - T(t)}{\Delta T} \right) \right]$$

where:

• e is the said modelled endurance expressed in kilometres, which corresponds to the available endurance before immobilisation of a travelling running flat system travelling at a constant temperature T;
• T is the temperature of the inside air (in degrees Celsius);
• $T_0$ is an arbitrary reference temperature (in degrees Celsius);

• $e_0$ is the estimated endurance at temperature $T_0$;

• $\Delta T$ (in degrees Celsius) is a difference in temperature corresponding to a reduction in the endurance by a factor of 2.

**13.** A method according to Claim 11, in which e(t) = F[T(t)] is given by:

$$e(t) = e_0^{'}\left(T_0 - T\right) + e_1^{'}$$

where:

• e is the modelled endurance expressed in km, which corresponds to the available endurance before immobilisation of a running flat system travelling at a constant temperature T;
• T is the temperature of the inside air (in degrees Celsius);
• $T_0$ is an arbitrary reference temperature (in degrees Celsius);
• $e_0^{'}$ is the gradient of the linear relationship between the endurance and (To - T), the difference between the maximum temperature and the measured temperature of the inside air;
• $e_1^{'}$ is the estimated endurance at temperature $T_0$

**14.** A method according to one of Claims 2 to 13, in which the maximum value of e is limited to an arbitrary given value.

**15.** A method according to one of Claims 1 to 14, in which there is used as a complementary characteristic parameter of the conditions of travel of the said running flat system the inflation pressure of the tyre concerned.

**16.** A method according to one of Claims 1 to 14, in which there is used as a complementary characteristic parameter of the conditions of travel of the said running flat system the location on the vehicle of the tyre concerned.

**17.** A method according to one of Claims 1 to 16, the said vehicle including means of estimating the load applied to the wheels, in which there is used as a complementary characteristic parameter of the conditions of travel of the said running flat system the load applied to the wheel concerned.

**18.** A method according to one of Claims 1 to 17, the said vehicle including means of measuring the temperature outside the vehicle, in which there is used as a complementary characteristic parameter of the conditions of travel of the said running flat system the said outside temperature.

**19.** A method according to one of Claims 1 to 18, in which there is used as a complementary characteristic parameter of the conditions of travel of the said running flat system the speed of travel of the vehicle.

**20.** A method according to one of Claims 1 to 19, the said vehicle including means of measuring the transverse forces applied to the said wheels, in which there is used as a complementary characteristic parameter of the conditions of travel of the said running flat system the said transverse forces.

**21.** A method according to one of Claims 1 to 20, in which there is used as a complementary characteristic parameter at least one quantity selected from the group comprising longitudinal forces, the type of vehicle, the speed of motion of the windscreen wipers and the location of the tyre concerned.

**22.** A method according to one of Claims 1 to 21, in which there is used as a complementary characteristic parameter at least one quantity selected from the group comprising the air temperature inside and the pressure of the other, inflated tyres.

**23.** A method according to one of Claims 1 to 22, in which the means of structural reinforcement of the tyre are a safety bearing arranged radially outside relative to the rim of the said wheel and intended to support the tread of the said tyre in the event of loss of pressure of inflation.

**24.** A method according to one of Claims 1 to 22, in which the means of structural reinforcement of the tyre are inserted into the structure of the said tyre.

**25.** The application of the method according to one of Claims 1 to 24 to the evaluation of re-use of the tyre implicated by travel in the flat condition.

**26.** The application of the method according to one of Claims 1 to 23 to the evaluation of re-use of the safety insert of the tyre implicated by travel in the flat condition.


**Patentansprüche**

**1.** Verfahren zur Auswertung der Autonomie eines Notlaufsystems, mit dem ein Fahrzeug ausgestattet ist, wobei das System mindestens für jedes Rad eine Drucklufthülle, einen Luftablasswächter und Mittel zur Unterstützung der Lauffläche der Drucklufthülle im Falle eines Luftablassens aus der Hülle umfasst, **dadurch gekennzeichnet, dass** ab dem Zeitpunkt, zu dem der Luftablasswächter eine vorbestimmte Luftablassschwelle erfasst hat:

- regelmäßig die durchlaufene Distanz und ein für die Fahrbedingungen charakteristischer Parameter C(t) gemessen werden;
- in Abhängigkeit von C(t) und der durchlaufenen Distanz während des Zeitraums $\Delta t$ eine charakteristische Größe für eine potentielle elementare Beschädigung des Systems während des abgelaufenen Zeitraums $\Delta t$ bestimmt wird;
- eine Auswertung der Gesamtbeschädigung durch Kombination der seit Beginn des Notlaufs berechneten elementaren Beschädigungen berechnet wird; und
- an den Fahrer des Fahrzeugs eine Größe übermittelt wird, die mit dieser Auswertung der Gesamtbeschädigung des Notlaufsystems verbunden ist.

**2.** Verfahren zur Auswertung der Autonomie eines Notlaufsystems nach Anspruch 1, bei dem aus einer Reihe von Fahrtests unter Bedingungen, die jenen des charakteristischen Parameters C entsprechen, eine Funktion F(C) bestimmt wird, die für jeden Wert des Parameters C eine Auswertung e der Autonomie des neuen Notlaufsystems unter diesen Fahrbedingungen C ergibt:

$$e = F(C)$$

**3.** Verfahren zur Auswertung der Autonomie eines Notlaufsystems nach Anspruch 2, bei dem die potentielle elementare Beschädigung $\Delta J$ während des Fahrzeitraums $\Delta t$ durch folgendes Verhältnis bestimmt wird:

$$\Delta J = \Delta d / e(t)$$

bei dem $\Delta d$ gleich der vom Fahrzeug während des Zeitraums $\Delta t$ durchlaufenden Distanz ist.

**4.** Verfahren zur Auswertung der Autonomie eines Notlaufsystems nach Anspruch 3, bei dem, wenn J als Verwendungspotential des Notlaufsystems betrachtet wird, zu jedem Messzeitraum $\Delta t$ die Auswertung von J(t) aktualisiert wird durch:

$$J(t) = J(t-\Delta t) - \Delta J$$

**5.** Verfahren zur Auswertung der Autonomie eines Notlaufsystems nach Anspruch 4, bei dem J auf 1 initialisiert wird, wenn das Notlaufsystem neu ist.

**6.** Verfahren zur Auswertung der Autonomie eines Notlaufsystems nach einem der Ansprüche 4 und 5, bei dem an den Fahrer des Fahrzeugs der aktualisierte Wert von J(t) übermittelt wird.

**7.** Verfahren zur Auswertung der Autonomie eines Notlaufsystems nach einem der Ansprüche 4 bis 6, bei dem, wenn E als Restautonomie des Notlaufsystems unter den aktuellen Fahrbedingungen angesehen wird, an den Fahrer des Fahrzeugs ein aktualisierter Wert dieser Auswertung übermittelt wird.

**8.** Verfahren zur Auswertung der Autonomie eines Notlaufsystems nach Anspruch 7, bei dem E ausgewertet wird durch:

$$E = J(t) \times e(t)$$

**9.** Verfahren zur Auswertung der Autonomie eines Notlaufsystems nach einem der Ansprüche 4 bis 8, bei dem, wenn eine gegebene Schwelle $J_0$ überschritten wird, an den Fahrer eine Warnung übermittelt wird.

**10.** Verfahren nach einem der Ansprüche 1 bis 9, bei dem, wenn der gemessene Aufblasdruck geringer als eine gegebene Schwelle ist, angenommen wird, dass sich der betreffende Reifen unter Notlaufbedingungen befindet.

**11.** Verfahren zur Auswertung der Autonomie eines Notlaufsystems nach einem der Ansprüche 1 bis 10, bei dem, wobei der Luftablasswächter, der regelmäßig zusätzlich zum Aufblasdruck des Reifens die Temperatur der Innenluft T misst, als charakteristischer Parameter für die Fahrbedingungen des Notlaufsystems die Temperatur der Innenluft des betreffenden Reifens verwendet wird.

**12.** Verfahren zur Auswertung der Autonomie eines Notlaufsystems nach Anspruch 11, bei dem e(t) = F[T(t)] gegeben ist durch:

$$e(t) = e_0 \exp\left[ (\ln 2)\left( \frac{T_0 - T(t)}{\Delta T} \right) \right]$$

wobei:

• e die modellierte Autonomie, ausgedrückt in Kilometern, ist, die der verfügbaren Autonomie vor Feststellung eines Notlaufsystems, das bei einer konstanten Temperatur T läuft, entspricht;
• T die Temperatur der Innenluft (in Grad Celsius) ist;
• $T_0$ eine willkürliche Referenztemperatur (in Grad Celsius) ist;
• $e_0$ die geschätzte Autonomie bei der Temperatur $T_0$ ist;
• $\Delta T$ (in Grad Celsius) ein Temperaturintervall ist, das einer Reduktion der Autonomie um einen Faktor 2 entspricht.

**13.** Verfahren zur Auswertung der Autonomie eines Notlaufsystems nach Anspruch 11, bei dem e(t) = F[T(t)] gegeben ist durch:

$$e(t) = e_0 (T_0 - T) + e_1$$

wobei:

• e die modellierte Autonomie, ausgedrückt in Kilometern, ist, die der verfügbaren Autonomie vor Feststellung eines Notlaufsystems, das bei einer konstanten Temperatur T läuft, entspricht;
• T die gemessene Temperatur der Innenluft (in Grad Celsius) ist;
• $T_0$ eine willkürliche Referenztemperatur (in Grad Celsius) ist;
• $e'_0$ das Gefälle des linearen Verhältnisses zwischen der Autonomie und $(T_0 - T)$, die Abweichung zwischen der maximalen Temperatur und der gemessenen Temperatur der Innenluft, ist;
• $e'_1$ die geschätzte Autonomie bei der Temperatur $T_0$ ist.

**14.** Verfahren zur Auswertung der Autonomie eines Notlaufsystems nach einem der Ansprüche 2 bis 13, bei dem der Maximalwert von e auf einen gegebenen willkürlichen Wert festgesetzt wird.

15. Verfahren zur Auswertung der Autonomie eines Notlaufsystems nach einem der Ansprüche 1 bis 14, bei dem als komplementärer charakteristischer Parameter der Fahrbedingungen des Notlaufsystems der Aufblasdruck des betreffenden Reifens verwendet wird.

16. Verfahren zur Auswertung der Autonomie eines Notlaufsystems nach einem der Ansprüche 1 bis 14, bei dem als komplementärer charakteristischer Parameter der Fahrbedingungen des Notlaufsystems die Lokalisierung des betreffenden Reifens auf dem Fahrzeug verwendet wird.

17. Verfahren zur Auswertung der Autonomie eines Notlaufsystems nach einem der Ansprüche 1 bis 16, bei dem, wobei das Fahrzeug Mittel zur Auswertung der an die Räder angelegten Last umfasst, als komplementärer charakteristischer Parameter der Fahrbedingungen des Notlaufsystems die an das betreffende Rad angelegte Last verwendet wird.

18. Verfahren zur Auswertung der Autonomie eines Notlaufsystems nach einem der Ansprüche 1 bis 17, bei dem, wobei das Fahrzeug Mittel zum Messen der Außentemperatur des Fahrzeugs umfasst, als komplementärer charakteristischer Parameter der Fahrbedingungen des Notlaufsystems die Außentemperatur verwendet wird.

19. Verfahren zur Auswertung der Autonomie eines Notlaufsystems nach einem der Ansprüche 1 bis 18, bei dem als komplementärer charakteristischer Parameter der Fahrbedingungen des Notlaufsystems die Fahrgeschwindigkeit des Fahrzeugs verwendet wird.

20. Verfahren zur Auswertung der Autonomie eines Notlaufsystems nach einem der Ansprüche 1 bis 19, bei dem, wobei das Fahrzeug Mittel zum Messen der an die Räder angelegten Querkräfte umfasst, als komplementärer charakteristischer Parameter der Fahrbedingungen des Notlaufsystems die Querkräfte verwendet werden.

21. Verfahren zur Auswertung der Autonomie eines Notlaufsystems nach einem der Ansprüche 1 bis 20, bei dem als komplementärer charakteristischer Parameter mindestens eine Größe verwendet wird, die aus der Gruppe der Längskräfte, des Fahrzeugtyps, der Wischgeschwindigkeit der Scheibenwischer und der Lokalisierung des betreffenden Reifens ausgewählt wird.

22. Verfahren zur Auswertung der Autonomie eines Notlaufsystems nach einem der Ansprüche 1 bis 21, bei dem als komplementärer charakteristischer Parameter mindestens eine Größe verwendet wird, die aus der Gruppe der Temperatur der Innenluft und des Drucks der anderen aufgeblasenen Reifen ausgewählt wird.

23. Verfahren nach einem der Ansprüche 1 bis 22, bei dem die Mittel zur Strukturverstärkung der Drucklufthülle eine Sicherheitsabstützung sind, die radial außen in Bezug zur Felge des Rades angeordnet und dazu bestimmt ist, die Lauffläche der Drucklufthülle im Falle eines Verlustes des Aufblasdruckes zu unterstützen.

24. Verfahren nach einem der Ansprüche 1 bis 22, bei dem die Mittel zur Strukturverstärkung der Drucklufthülle in die Struktur der Hülle eingefügt sind.

25. Anwendung des Verfahrens nach einem der Ansprüche 1 bis 24 für die Auswertung der Wiederverwendung des vom Notlauf betroffenen Reifens.

26. Anwendung des Verfahrens nach einem der Ansprüche 1 bis 23 für die Auswertung der Wiederverwendung des Sicherheitseinsatzes des vom Notlauf betroffenen Reifens.

Initialisation
J = 1

au temps t
$\Delta t = t - t'$

Pression inférieure à $p_0$ ?

mesure de
d(t)
C(t)

Oui

Non

calcul de
$\Delta d = d(t) - d(t-\Delta t)$
$e(t) = F(C(t))$

endommagement élémentaire
$\Delta J = \Delta d/e(t)$

$J(t) = J(t-\Delta t) - \Delta J$

Affichage
- Potentiel restant :
J x 100
- Autonomie estimée :
$E = J(t) \times e(t)$

J(t) inférieur à $J_0$ ?

Non

Non

Oui

Arrêt recommandé

J(t) = 0 ?

Oui

STOP

Fig. 1

**EP 1 305 173 B1**

## RÉFÉRENCES CITÉES DANS LA DESCRIPTION

**Documents brevets cités dans la description**

- WO 9413498 A
- EP 0796747 A

- US 6026878 A